# EUROPEAN PATENT SPECIFICATION

(11) **EP 0 293 100 B1**
(45) Date of publication and mention of the grant of the patent: **03.11.1993**
(21) Application number: 88304084.2
(22) Date of filing: 05.05.1988
(51) Int. Cl.: G05D 23/24, H02H 5/04, B60H 1/22

(54) **Electrically heated seat control system**
Regelsystem für elektrisch beheizten Sitz
Système de régulation pour siège chauffé électriquement

(30) Priority: 13.05.1987 US 49618
(43) Date of publication of application: 30.11.1988
(73) Proprietor: NARTRON CORPORATION, Reed City Michigan 49677-0207 (US)
(72) Inventor: Wilhelm, Daniel D., Reed City Michigan 49677 (US)
(74) Representative: Adams, William Gordon

(56) References cited:
- EP-A- 0 196 802
- DE-A- 2 757 334
- DE-B- 2 309 104
- DE-B- 2 850 859
- GB-A- 1 432 024
- US-A- 4 477 747
- US-A- 4 546 238

## Description

### Technical Field

The present invention relates to a control for energising a heating element in a motor vehicle seat.

### Background Art

Electronically energised heated seats are now increasingly available in motor vehicles. The seat warms a motor vehicle operator before the motor vehicle's heating system becomes effective. A typical automobile heating system can take five to ten minutes after the engine begins running before the thermostat opens. A heating element embedded within a seat starts to heat the motorist as soon as current flows through the heating element. A heated seat option mat include resistive elements embedded within only the driver seat, or in some instances both the driver and passenger seat.

One control system primarily designed for use in controlling the actuation or energisation of a heated seat is disclosed in U.S. Patent No. 4,546,238 to Ahs. The control system disclosed in this patent utilizes the fact that the resistance of the resistive heating element changes with temperature. By monitoring a voltage signal generated across the resistance element, the temperature of the resistance element is determined. Comparator circuits in the control system in the control system energise and de-energise the resistive heating element to maintain the heating element temperature within a control range.

A potential problem in controlling a resistive heater element is protection against electrical short circuits. A short circuit in the heating element and/or its control circuit can produce overheating and permanent damage. In a car seat, a large overcurrent might even cause the seat to catch fire. Over current sensing and transient protection to prevent circuit damage due to high voltage spikes are necessary features in a reliable and safe heated seat system.

A system for controlling the supply of current to a resistive heating element and for detecting a short circuit therein is disclosed in a German specification DE-B2-2,309,104 in connection with the preparation of concrete items. In response to detection of such a short circuit it acts to remove the supply voltage from the element so preventing ignition of wooden formers for example.

Neither of these prior art disclosures makes any provision for the monitoring of the means which controls the supply of current to the heating element in response to its temperature.

### Disclosure of the Invention

It is an object of the invention to provide a reliable, safe, and inexpensive control system for electrically energising a resistive heating element in a motor vehicle seat.

According to the invention, apparatus for heating a motor vehicle seat by energising a resistive heating element (10) embedded within the seat, comprises sensing means to sense a temperature of said heating element and generate a control signal output related to said temperature; control switch means for coupling in series with the heating element and having an input coupled and responsive to the output of the sensing means whereby to control current through the heating element; supply switch means for coupling to a motor vehicle ignition switch to couple a voltage across the series combination of heating element and control switch means; and failure detection means arranged to operate said supply switch means to de-energise said heating element in the event of a malfunction in the apparatus, characterised in that:
said failure detection means is operative to sense a malfunction in the control switch means.

The sensed malfunction may be such that the supply voltage is applied across the heating element at all times, for example a short circuit in a field effect transistor constituting the control switch means. Additionally a short circuit causing the supply voltage to bypass the heating element, or a short circuit in the heating element itself may be sensed. Such malfunctions can result in high currents and excessive heat which can damage or even ignite the vehicle seat.

In addition transients that can exist in a vehicle electrical system and that can disrupt or damage the heating apparatus are sensed and intercepted.

In a preferred embodiment of the invention, the control switch means comprises a transistor which is biassed on and off in a manner dependent upon the temperature of the resistive heating element. So long as the resistive heating element is below a set point temperature, controlled by the motor vehicle operator, the transistor cycles on and off energizing the heating element. The resistive heating element has a positive co-efficient that causes the heating element resistance to rise as the temperature rises. By monitoring this resistance, a sensing circuit controls the bias on the transistor as the temperature of the heating element rises and falls above and below the set or control temperature. When the heating element is heating up and transmitting energy to the seat in the form of joule heating energy, the transistor is cycled on and off at a frequency controlled by a timing circuit interposed between the transistor and the sensing circuit.

A control module mounted to a vehicle dashboard includes a light for illuminating the control system, a switch for actuation of the control system by the vehicle operator, and a variable control for adjusting a set or control temperature of the heated seat. In addition, light emitting diodes are utilized to apprise the vehicle operator of the status of the control and in particular indicate those intervals in which the resistive heating element is carrying a high current and transmitting heat to the seat.

From the above it is appreciated that one object of the invention is a new and improved control system for energizing a heated seat heating element. This and other objects and advantages of the invention will become better understood from a detailed description of a preferred embodiment of the invention discussed below in conjunction with the accompanying drawings.

### Brief Description of the Drawings

Figure 1 is a perspective view of a motor vehicle seat having an embedded resistive heating element;
Figures 2 and 3 are schematic diagrams of a control system for energizing the resistive heating element of Figure 1; and
Figure 4 depicts an alternate control system schematic.

### Best Mode for Carrying Out the Invention

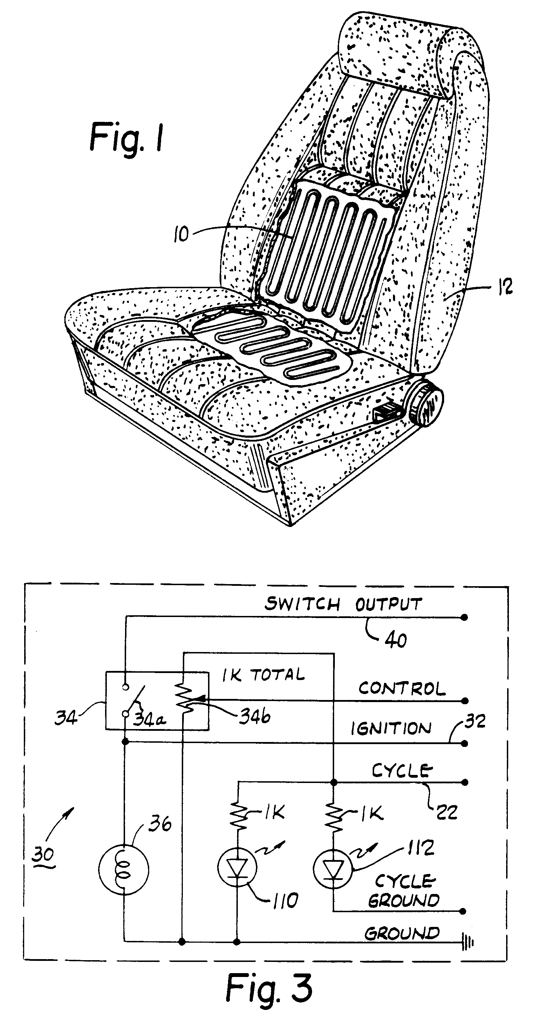

Turning now to the drawings, Figure 1 shows a automobile seat having a resistive element 10 embedded within the seat 12. During periods of cold weather, the driver may actuate the heated seat to cause current to flow through the resistive element 10 and warm the seat prior to the automobile heater becoming effective.

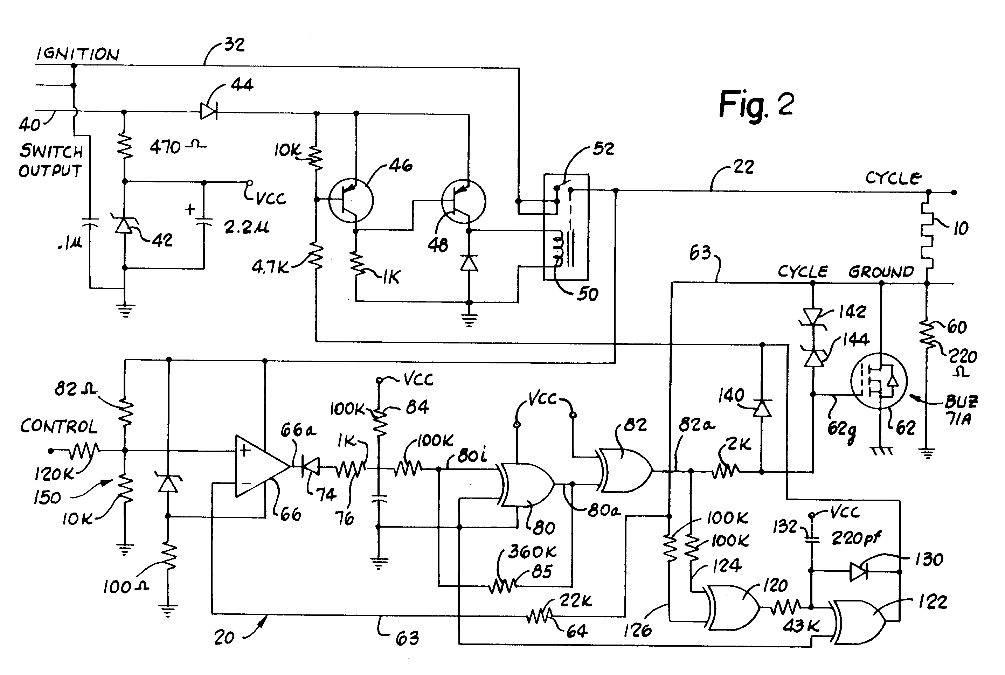

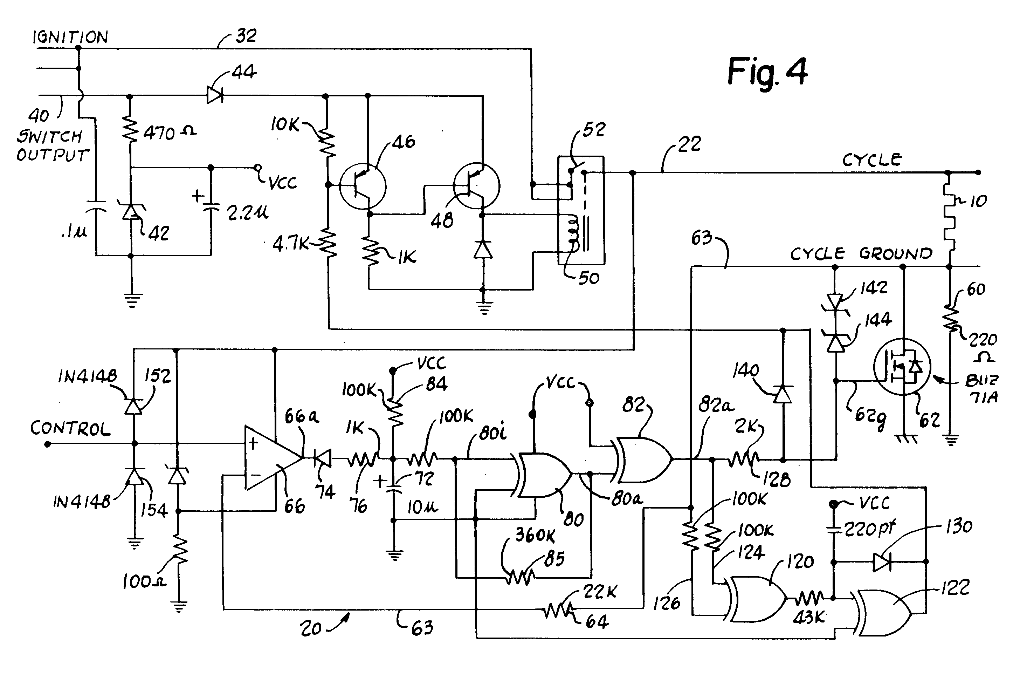

An energization circuit 20 (Figure 2) for activating the resistive element 10 includes an energization input 22 shown schematically coupled to the heating element 10. A control module 30 (Figure 3) is mounted to the motor vehicle dashboard within convenient reach of the motor vehicle operator. Both the energization circuit 20 and the control module 30 are coupled to an ignition switch input 32 that energizes both the circuit 20 and control module 30 whenever the ignition key is switched on. Typically, this ignition input carries a regulated 12 volt signal from the vehicle battery.

The control module 30 includes a combined switch/potentiometer control unit 34. A switch 34a can be opened and closed by the vehicle operator to activate and deactivate the heated seat option. A variable resistor 34b of the control switch unit 34 allows an adjustment of the heated seat temperature by the adjustment of a resistance. When the ignition signal input 32 is high (+12v), a light bulb 36 coupled across the ignition signal and autombile ground is energized to illuminate the switch 34. When the switch contact 34a is closed, the 12 volt ignition signal at the input 32 is coupled to an output 40 labelled "switch output" in Figure 3. This switch output is therefore a 12 volt regulated signal which is input to the energization circuit 20 when the switch 34a is closed.

The voltage at the input 40 is coupled across a combination of a resistor and a zener diode 42 having a break down voltage of approximately 16 volts. An output labelled VCC in Figure 2 therefore follows the switched ignition voltage 40 unless this input exceeds 16 volts at which point the zener doide 42 breaks down and regulates the VCC voltage to 16 volts. The VCC signal is used to energize those remaining components of the energization circuit 20 that require an external power source.

The voltage at the input 40 is also coupled to a diode 44 which prevents negative transients from reaching the circuit 20. Specifically, the diode 44 prevents those transients from reaching two switching transistors 46, 48. The voltage at the input 40 in combination with the biasing resistors coupled to the two transistors 46, 48 turns on the transistor 48 causing current to flow through a relay coil 50 coupled to the collector of the transistor 48. Energization of this coil 50 closes a relay contact 52 and couples the ignition signal input 32 to the resistive element 10. The ignition voltage therefore energizes the heated seat whenever the relay contact 52 is closed.

As seen in Figure 2, a negative side of the resistive heating element 10 is coupled to a 220 ohm resistor 60 and a field effect transistor 62 which together form a parallel path to ground for the energizing signal from the ignition 32. The current through the resistive heating element 10 depends upon the status of the field effect transistor 62. When this transistor is rendered nonconductive, it presents a high impedance path to the ignition voltage and a low level quiescent current through the heating element 10 is produced by the ignition voltage applied across the series combination of the resistive heating element 10 and the resistor 60. When the transistor 62 is rendered conductive, however, the resistor 60 is essentially bypassed and the transistor 62 forms a low resistance path to ground so that current through the heating element 10 increases. Under these circumstances high current passes through the heating element 10 and the seat 12 is heated.

A conductor 63 connected at the juncture of the resistive heating element 10 and the resistor 60 is coupled to a comparator amplifier 66 through a resistor 64. An output 66a from the comparator amplifier 66 is high or low depending upon the relative size of the two inputs to the amplifier 66. A second input (at a non-inverting input to the amplifier) labelled CONTROL in Figures 2 and 3 is controlled by the variable resistor 34b in the control module 30.

The variable resistor 34b is coupled to the input 22 which is energized by the ignition input 32 whenever the relay contact 52 (Figure 2) closes. By adjusting the setting of an adjustable control knob coupled to the variable resistor 34b, the motor vehicle operator raises and lowers the CONTROL input voltage to the amplifier 66 and accordingly raises and lowers a reference voltage to control the point at which the output 66a changes state. This knob is labeled with temperature indicators to inform the motor vehicle operator which direction the knob must be turned to raise or lower the seat temperature.

If the temperature of the heating element 10 is below a desired seat temperature when the ignition switch is closed, the voltage input to the amplifier 66 from the negative side of the resistive heating element 10 is higher than the CONTROL input to the comparator amplifier 66. This produces a low signal at the amplifier output 66a which discharges a capacitor 72 through the series combination of a diode 74 and resistor 76. The capacitor 72 discharges with a time constant dependent upon the capacitance of the capacitor 72 and a resistance of the resistor 76.

The voltage on the capacitor 72 is coupled to an input 80i of an exclusive OR gate 80. The output 80a from the gate 80 is coupled to a second exclusive OR gate 82. These gates in combination act as an inverter circuit so that a low signal at the input to the first gate 80 from the capacitor 72 causes a high signal at the output 82a of the second exclusive OR gate 82. The output 82a from the second exclusive OR gate 82 is coupled to a gate input 62g of the field effect transistor 62. A high signal at the gate input 62g turns on the field effect transistor 62 and shorts the resistor 60 to increase the current passing through the heating element 10.

When the transistor 62 is rendered conductive, the voltage at the inverting input to the comparator amplifier drops below the CONTROL input. The output 66a goes high and the capacitor 72 charges through a resistor 84. The capacitor 72 charges at a rate determined by the RC time constant of the resistor 84 and capacitor 72 and is slower than the discharge rate of the capacitor 72.

A feedback resistor 85 connects the gate input 80i to the gate output 80a. The resistor 85 provides hysterisis to the operation of the gate 80. As the capacitor 72 discharges a lower capacitor voltage is needed to cause the gate 80 output to change state than is needed when the capacitor is charging. This is because when the capacitor 72 discharges, the resistor 85 tends to pull up the voltage on the input 80i and when the capacitor 72 is charging the resistor 85 tends to diminish the voltage at the input 80i. The crossover voltage of the gate input 80i is typically approximately VCC ÷ 2. As the capacitor 72 charges, it must charge to a value of (VCC ÷ 2) + 10% to bring the input 80i to VCC ÷ 2. As the capacitor 72 discharges, it must discharge to a value of (VCC ÷ 2)-10% to drop the input 80i to VCC ÷ 2.

As the transistor 62 cycles on and off the heating element 10 heats up and due to its positive coefficient of resistance, the voltage across the resistance element 10 drops. As the element's resistance drops the voltage at the junction between the heating element 10 and resistor 60 drops below the reference or CONTROL input to the amplifier 66 with the transistor 62 non-conductive and the amplifier output 66a remains high. This maintains the charge on the capacitor 72 so that the inverter formed from the combination of the two exclusive OR gates 80, 82 keeps the transistor 62 turned off.

The quiescent or low level current through the heating element 10 is defined by the voltage across the heating element 10 and series connected resistor 60. The motor vehicle operator can open the switch 34a once the seat has been heated to remove even this low level current from the resistive heating element 10 but the heating affects with the switch 34a closed are minimal.

Returning to Figure 3, two light emitting diodes 110, 112 indicate the operating condition of the energization circuit 20. A first light emitting diode 110 is coupled across the output from the relay switch 52 to indicate when the resistive element 10 is energized. A second light emitting diode 112 is coupled in parallel to the resistive heating element 10 and is forward biased to emit light only when the transistor 62 conducts. Stated another way, when the transistor 62 is not conducting, the voltage drop across the resistive heating element is too small to cause this second light emitting diode 112 to emit light.

Two additional exclusive OR gates 120, 122 (Figure 2) check for a short circuit condition of either the transistor 62 or the heating element 10. The exclusive OR gate 120 has two inputs 124, 126. One input 124 is coupled to the gate input 62g of the transistor 62 through a resistor 128. A second input 126 is coupled to the junction between the heating element 10 and the resistor 60. In the event of a short circuit of the transistor 62 both inputs 124, 126 go low. This forces the output of the exclusive OR gate 120 low which also forces the output from the exclusive OR gate 122 low. The gate 122 in combination with a diode 130 and capacitor 132 latch the output signal from the gate 120. The output from the gate 122 is coupled to the base input of the transistor 46. A low signal at the base of the transistor 46 turns that transistor on, raising the voltage at that transistor's collector, causing a base input to the transistor 48 to turn off the second transistor 48. With the transistor 48 in a off state, the relay coil 50 is de-energized and the normally opened relay contact 52 opens.

A short circuit across the heating element 10 is also sensed and used to open the relay contact 52. A short across the heating element 10 at a time when the field effect transistor 62 is on means both inputs 124, 126 to the exclusive OR gate 120 are high. The output from the gate 120 then goes low as does the output from the gate 122. This turns on the transistor 46 to bias the transistor 48 off and open the relay contact 52.

Note that a low output from the gate 122 not only de-energizes the heating element 10 but turns off the transistor 62 by grounding the gate input 62g through a diode 140.

The short circuit protection prevents high, potentially dangerous currents from developing in the heating element 10. These high currents could potentially damage the circuit 20 and could also cause the seat 12 to catch on fire.

Two zener diodes 142, 144 are series coupled across the gate input 62g of the transistor 62 and the juncture of the heating element 10 and resistor 60. The diode 142 limits the voltage across the gate of the transistor 62 to 7.5 volts. Transient protection for the transistor 62 is provided by the diode 144 which has a breakdown voltage of 47 volts.

The comparator amplifier 66 is proteced against transients by a resistor network 150 coupled to the non-inverting comparator input. The network 150 allows the voltage output from the variable resistor 34b to control the input to the comparator while preventing transients from reaching the comparator amplifier 66. An alternate transient suppression circuit is illustrated in Figure 4. In the alternate circuit the resistor network 150 (Figure 2) is replaced with two diodes 152, 154 which block transients from reaching the comparator amplifier.

In operation, the status of the gate input 62g determines whether the heating element 10 carries a high level or quiescent current. The gate input 62g is in turn controlled by the voltage across the resistor 60 which as noted previously depends on the resistance and therefore temperature of the heating element 10. The transistor 62 cycles on and off at a rate controlled by the RC time constant of the capacitor 72 and resistor 84 until the heating element 10 reaches a reference temperature controlled by the operator adjusted CONTROL input to the comparator 66. When this occurs the transistor 62 is turned off until the heating element temperature again falls below the reference.

## Claims

1. Apparatus for heating a motor vehicle seat (12) by energising a resistive heating element (10) embedded within the seat, comprising sensing means (60,64,66) to sense a temperature of said heating element and generate a control signal output (66a) related to said temperature; control switch means (62) for coupling in series with the heating element and having an input coupled and responsive to the output (66a) of the sensing means whereby to control current through the heating element; supply switch means (50,52) for coupling to a motor vehicle ignition switch to couple a voltage across the series combination of heating element and control switch means; and failure detection means (120) arranged to operate said supply switch means to de-energise said heating element in the event of a malfunction in the apparatus, characterised in that:
said failure detection means is operative to sense a malfunction in the control switch means.

2. Apparatus according to claim 1 wherein said failure detection means is also operative to detect a malfunction in the heating element.

3. Apparatus according to claim 1 or claim 2 wherein the failure detection means is arranged to detect excessive current through the control switch means and/or the heating element.

4. Apparatus according to any preceding claim wherein the supply switch means comprises a relay having a coil (50) and a contact (52) that closes when the coil is energised, and where the failure detection means de-activates the coil in the event of a malfunction in the apparatus.

5. Apparatus according to any preceding claim wherein the control switch means comprises a gate controlled transistor (62) which turns on to carry current passing through the heating element.

6. Apparatus according to any preceding claim wherein delay means (72,74) are coupled between the sensing means and the control switch means for imposing a time delay between a change in the control signal output from said sensing means and receipt of the change in the control signal output by the control switch means.

7. Apparatus according to any preceding claim additionally comprising means (44) for suppressing spurious transient signals originating at the supply switch means from reaching the sensing means, the control switch means, and the failure detection means.

8. Apparatus according to any preceding claim wherein the temperature sensing means includes a comparator (66) for comparing a temperature signal (63) from the heating element with an operator adjusted reference signal (CONTROL).

9. Apparatus according to any preceding claim wherein the failure detection means is also arranged to turn off said control switch means in the event of a said malfunction.

10. Apparatus according to any preceding claim wherein the failure detection means comprises a logic gate (120).

11. Apparatus according to claim 10 wherein said logic gate has a first input (124) coupled to the input of said control switch means and a second input (126) coupled to said heating element, said logic gate producing a fault signal when the first and second inputs are both above or both below a threshold level.

12. A motor vehicle comprising a seat (12) having a heating element embedded therein and apparatus according to any preceding claim coupled to the heating element.

13. A vehicle according to claim 12 wherein the vehicle comprises ignition switch means coupled to the said apparatus.

14. A method of energising a resistive heating element (10) embedded within a motor vehicle seat comprising the steps of:
coupling (50,52) a supply voltage across the series combination of the heating element and an impedance device (60);
sensing the temperature of the heating element by monitoring (66) its resistance;
periodically increasing current through the heating element by switching in a low impedance path (62) in parallel with the impedance device at a controlled frequency until the temperature of the heating element reaches a control value (CONTROL) as indicated by the resistance of the heating element; and characterised by the further step of:
monitoring a control voltage at an input (62g) controlling the switching in of the low impedance path and removing (50,52) said supply voltage if a fault condition is sensed.

15. A method according to claim 14 wherein the switching in of a low impedance path is effected by controlling the gate input (62g) of a field effect transistor (62) and the voltage at said gate input is the monitored voltage.

16. A method according to claim 14 or claim 15 and further comprising the steps of monitoring a voltage at the juncture between the heating element and the impedance device to sense a fault condition, and removing (50,52) said supply voltage if a fault condition is sensed.

17. A method according to any one of claims 14 to 16 wherein the fault condition which is monitored is a short circuit associated with the heater element and/or the low impedance path.

18. A method according to any of claims 14 to 17 wherein said coupling of the supply voltage is accomplished by closing a relay contact (52) and said relay contact is opened in response to the sensing of a fault condition.

## Patentansprüche

1. Einrichtung zum Beheizen eines Kraftfahrzeugsitzes (12) durch Zuführung von Energie an ein im Sitz eingebettetes Widerstandheizelement (10), enthaltend Sensormittel (60,64,66) zur Ermittlung der Temperatur des Heizelements und zur Erzeugung eines auf diese Temperatur bezogenen Ausgangssteuersignals (66a), einen Steuerschalter (62) zum in Reihe schalten mit dem Heizelement, der über einen mit dem Ausgang (66a) der Sensormittel gekoppelten und davon abhängigen Eingang verfügt, um den Strom im Heizelement zu steuern, Versorgungsschalter (50,52) zum Verbinden mit einer Kraftfahrzeugmotorzündung, um eine Spannung über die Reihenkombination von Heizelement und Steuerschalter zu schalten, und Mittel zum Erkennen eines Versagens (120), das so eingerichtet ist, daß die Versorgungsschalter derart betrieben werden, daß die Energiezuführung an das Heizelement im Fall einer Fehlfunktion unterbrochen wird, dadurch gekennzeichnet, daß die Mittel zur Erkennung eines Versagens so betrieben werden, daß sie eine Fehlfunktion im Steuerschalter ermitteln.

2. Einrichtung nach Anspruch 1, worin die Mittel zum Erkennen eines Versagens auch derart betrieben werden, daß eine Fehlfunktion im Heizelement erkannt wird.

3. Einrichtung nach Anspruch 1 oder 2, worin das Mittel zur Erkennung eines Versagens ausgelegt ist, um einen übermäßigen Stromfluß durch den Steuerschalter und/oder das Heizelement zu erkennen.

4. Einrichtung nach einem der vorhergehenden Ansprüche, worin der Versorgungsschalter ein Relay mit einer Spule (50) und einem Kontakt (52), der sich bei Energiezuführung an die Spule schließt, umfaßt und worin die Mittel zur Erkennung eines Versagens die Spule im Falle einer Fehlfunktion der Einrichtung deaktivieren.

5. Einrichtung nach einem der vorhergehenden Ansprüche, worin die Steuerschalter einen gittergesteuerten Transistor (62) enthalten, der einschaltet, um Strom durch das Heizelement zu führen.

6. Einrichtung nach einem der vorhergehenden Ansprüche, worin Verzögerungsmittel (72,74) zwischen die Sensormittel und die Steuerschalter geschaltet sind, um eine Zeitverzögerung zwischen einem Wechsel im Steuersignalausgang der Sensormittel und dem Empfang dieses Wechsels im Steuersignalausgang durch die Steuerschalter zu setzen.

7. Einrichtung nach einem der vorhergehenden Ansprüche, enthaltend Mittel (44) zur Unterdrückung ungewollter, schnellvergehender, vom Versorgungsschalter stammender Signale vor dem Erreichen der Sensormittel, des Steuerschalters und der Mittel zur Erkennung eines Versagens.

8. Einrichtung nach einem der vorhergehenden Ansprüche, worin die Temperaturfühler einen Komparator (66) zum Vergleichen eines Temperatursignals (63) vom Heizelement mit einem durch einen Operator eingestellten Vergleichssignal (Kontrollsignal) einschließen.

9. Einrichtung nach einem der vorhergehenden Ansprüche, worin die Mittel zur Erkennung eines Versagens auch so eingerichtet sind, daß sie den Steuerschalter im Falle der besagten Fehlfunktion ausschalten.

10. Einrichtung nach einem der vorhergehenden Ansprüche, worin die Mittel zum Erkennen eines Versagens ein logisches Gitter (120) umfassen.

11. Einrichtung nach Anspruch 10, worin das logische Gitter einen ersten Eingang (124) aufweist, der mit dem Eingang des Steuerschalters und einem zweiten Eingang (126), der mit dem Heizelement verbunden ist, verbunden ist, wobei das logische Gitter ein falsches Signal erzeugt, wenn der erste und der zweite Eingang über oder beide unter einer Schwelle sind.

12. Kraftfahrzeug, das einen Sitz (12) mit einem darin eingebetteten Heizelement enthält und eine Einrichtung nach den vorhergehenden Ansprüchen, die mit dem Heizelement verbunden ist.

13. Kraftfahrzeug nach Anspruch 12, worin das Kraftfahrzeug einen Zündungsschalter enthält, der mit dieser Einrichtung verbunden ist.

14. Verfahren zur Zuführung von Energie zu einem Widerstandheizelement (10), das in einen Kraftfahrzeugsitz eingebettet ist, enthaltend die Stufen
Schalten (50,52) einer Versorgungsspannung über die Reihenkombination des Heizelements und einer Impedanzeinrichtung (60),
Ermitteln der Temperatur des Heizelements durch Überwachung (66) seines Widerstands,
periodisches Erhöhen des Stroms durch das Heizelement durch Parallelschalten eines Niederimpedanzwegs (62) mit der Impedanzeinrichtung bei einer geregelten Frequenz bis die Temperatur des Heizelements den Kontrollwert (Steuerwert), wie er durch den Widerstand des Heizelements gegeben ist, erreicht und gekennzeichnet durch die weitere Stufe des
Überwachens einer Steuerspannung an einem Eingang (62g), der das Einschalten des Niederimpedanzwegs und das Entfernen (50,52) dieser Versorgungsspannung, wenn eine Fehlerbedingung ermittelt wird, regelt.

15. Verfahren nach Anspruch 14, worin das Einschalten in einen Niederimpedanzweg durchgeführt wird durch Regeln des Gittereingangs (62g) eines ersten Feldeffekttransistors (62) und die Spannung dieses Gittereingangs die überwachte Spannung ist.

16. Verfahren nach Anspruch 14 oder Anspruch 15, daß darüber hinaus die Stufen des Überwachens einer Spannung an der Zusammenführung zwischen Heizelement und Impedanzeinrichtung zur Ermittlung einer Fehlerbedingung und das Entfernen (50,52) der Versorgungsspannung im Falle einer ermittelten Fehlerbedingung umfaßt.

17. Verfahren nach einem der Ansprüche 14 bis 16, worin die zu überwachende Fehlerbedingung ein Kurzschluß, verbunden mit dem Heizelement und/oder dem Niederimpedanzweg ist.

18. Verfahren nach einem der Ansprüche 14 bis 17, worin das Schalten der Versorgungsspannung durch Schließen eines Relaykontakts (52) erfolgt und dieser Relaykontakt als Antwort auf die Ermittlung einer Fehlerbedingung geöffnet wird.

## Revendications

1. Appareil pour chauffer un siège de véhicule à moteur (12) en mettant en circuit un élément chauffant résistant (10) incorporé dans le siège, comprenant des moyens de détection (60,64,66) pour mesurer la température de cet élément chauffant et produire un signal de commande (66a) correspondant à cette température; des moyens interrupteurs de commande (62) couplés en série à l'élément chauffant et ayant une entrée couplée et sensible à la sortie (66a) des moyens de détection de façon à commander le courant traversant l'élément chauffant; des moyens interrupteurs d'alimention (50,52) couplés à l'interrupteur d'allumage du véhicule à moteur pour coupler une tension en travers de la combinaison série de l'élément chauffant et des moyens interrupteurs de commande; et des moyens de détection de panne (120) disposés pour actionner les moyens interrupteurs d'alimentation afin de mettre hors circuit cet élément chauffant en cas d'un mauvais fonctionnement dans l'appareil, caractérisé en ce que ces moyens détecteurs de panne sont opérationnels pour détecter un mauvais fonctionnement dans les moyens interrupteurs de commande.

2. Appareil selon la revendication 1, dans lequel les moyens détecteurs de panne sont également opérationnels pour détecter un mauvais fonctionnement dans l'élément chauffant.

3. Appareil selon la revendication 1 ou la revendication 2, dans lequel les moyens détecteurs de panne sont agencés pour détecter un courant excessif traversant les moyens interrupteurs de commande et/ou l'élément chauffant.

4. Appareil selon l'une des revendications précédentes, dans lequel les moyens interrupteurs d'alimentation comprennent un relais ayant une bobine (50) et un contact (52) qui se ferme lorsque la bobine est excitée, et dans lequel les moyens détecteurs de panne désactivent la bobine en cas d'un mauvais fonctionnement dans l'appareil.

5. Appareil selon l'une des revendications précédentes, dans lequel les moyens interrupteurs de commande comprennent un transistor à commande par porte (62) qui devient conducteur pour amener le courant passant à travers l'élément chauffant.

6. Appareil selon l'une des revendications précédentes, dans lequel des moyens de temporisation (72,74) sont montés entre les moyens de détection et les moyens interrupteurs de commande pour imposer une temporisation entre un changement du signal de commande sortant des moyens de détection et la réception du changement dans le signal de commande sortant des moyens interrupteurs de commande.

7. Appareil selon l'une des revendications précédentes, comprenant en outre des moyens (44) pour supprimer les signaux transitoires parasites prenant leur origine au niveau des moyens interrupteurs d'alimentation pour atteindre les moyens de détection, les moyens interrupteurs de commande et les moyens détecteurs de panne.

8. Appareil selon l'une des revendications précédentes, dans lequel les moyens détecteurs de température comprennent un comparateur (66) pour comparer un signal de température (63) en provenance de l'élément chauffant avec un signal de référence réglé par l'opérateur (témoin).

9. Appareil selon l'une des revendications précédentes, dans lequel les moyens détecteurs de panne sont également agencés pour ouvrir les moyens interrupteurs de commande en cas d'un mauvais fonctionnement.

10. Appareil selon l'une des revendications précédentes, dans lequel les moyens détecteurs de panne comprennent une porte logique (120).

11. Appareil selon la revendication 10, dans lequel la porte logique a une première entrée (124) raccordée à l'entrée des moyens interrupteurs de commande et une deuxième entrée (126) raccordée à l'élément chauffant, cette porte logique produisant un signal de défaut lorsque les première et deuxième entrées sont toutes deux au-dessus ou toutes deux en dessous d'une valeur de seuil.

12. Véhicule à moteur comprenant un siège (12) dans lequel est incorporé un élément chauffant et un appareil selon l'une des revendications précédentes raccordé à l'élément chauffant.

13. Véhicule à moteur selon la revendication 12, qui comprend des moyens interrupteurs d'allumage couplés à cet appareil.

14. Méthode pour mettre en circuit un élément chauffant résistant (10) incorporé à l'intérieur d'un siège de véhicule à moteur, comprenant les étapes suivantes :
- coupler (50,52) une tension d'alimentation en travers de la combinaison série de l'élément chauffant et d'un dispositif d'impédance (60);
- mesurer la température de l'élément chauffant en contrôlant (66) sa résistance;
- augmenter périodiquement le courant à travers l'élément chauffant en commutant dans un trajet de faible impédance (62) en parallèle avec le dispositif d'impédance à une fréquence contrôlée jusqu'à ce que la température de l'élément chauffant atteigne une valeur de commande (témoin) comme indiqué par la résistance de l'élément chauffant; caractérisée par le stade suivant : contrôler une tension de commande au niveau d'une entrée (62g) commandant la mise en circuit du trajet de faible impédance et retirant (50,52) cette tension d'alimentation s'il est détecté un état de défaut.

15. Méthode selon la revendication 14, dans laquelle la mise en circuit d'un trajet de faible impédance est effectuée en commandant l'entrée de porte (62g) d'un transistor à effet de champ (62) et dans laquelle la tension au niveau de l'entrée de cette porte est la tension contrôlée.

16. Méthode selon la revendication 14 ou la revendication 15, comprenant en outre les stades suivants : contrôler une tension au niveau de la jonction entre l'élément chauffant et le dispositif d'impédance pour détecter une condition de défaut, et supprimer (50,52) cette tension d'alimentation s'il est détecté une condition de défaut.

17. Méthode selon l'une des revendications 14 à 16, dans laquelle la condition de défaut qui est contrôlée est un court-circuit associé à l'élément chauffant et/ou au trajet de faible impédance.

18. Méthode selon l'une des revendications 14 à 17, dans laquelle le couplage de la tension d'alimentation s'effectue par la fermeture d'un contact de relais (52) et dans laquelle ce contact de relais est ouvert en réponse à la détection d'une condition de défaut.
